# FASCICULE DE BREVET EUROPEEN

(11) **EP 1 312 881 B1**
(45) Date de publication et mention de la délivrance du brevet: **07.07.2004**
(21) Numéro de dépôt: 03000840.3
(22) Date de dépôt: 06.11.1997
(51) Int. Cl.: F26B 21/06, F26B 23/02, B27K 5/00

(54) **Procédé de traitement à haute température de matériau ligno-cellulosique**
Verfahren zur Behandlung von Lignocellulose-Materialien bei hoher Temperatur
Process for the heat treatment of lignocellulosic material

(30) Priorité: 13.12.1996 FR 9615352
(43) Date de publication de la demande: 21.05.2003
(62) Demande divisionnaire de: 97913265.1
(73) Titulaire: Pluri-Capital (PCI) Inc., Jonquiere, Quebec (CA)
(72) Inventeur: Unternahrer, Roland, 38370 Saint Clair du Rhône (FR); Chautemps, Cyrille, 42410 Chavanay (FR); Bernon, Jean-Pierre, 18000 Bourges (FR)
(74) Mandataire: Cabinet Hirsch

(56) Documents cités:
- WO-A-94/27102
- WO-A-95/22035
- FR-A- 2 720 969

## Description

La présente invention a pour objet un dispositif et un procédé de traitement à haute température d'un matériau ligno-cellulosique, tel que le bois.

Le traitement à haute température (high temperature treatment) des matériaux ligno-cellulosiques, tel que le bois, permet de réduire leur hydrophilie et d'améliorer leurs caractéristiques de stabilité.

Divers procédés et dispositifs pour le traitement à haute température des matériaux ligno-cellulosiques sont connus. FR-A-2 720 969 propose un tel procédé et une cellule pour sa mise en oeuvre. Ce document propose de procéder à un séchage des matériaux, puis à un chauffage en circuit fermé pendant lequel les gaz dégagés par le matériau sont utilisés comme combustibles, et enfin à un refroidissement par injection d'eau. L'étape de chauffage en circuit fermé proposée dans ce document ne permet pas d'assurer une élimination complète de l'humidité résiduelle après l'étape de séchage. En outre, l'utilisation des gaz dégagés par le matériau comme combustibles implique un pilotage de l'installation de traitement difficile à réaliser dans la pratique. Enfin, l'injection d'eau pour le refroidissement provoque un éclatement du matériau traité. La cellule proposée dans ce document pour la mise en oeuvre du procédé présente les inconvénients correspondants, et il est en réalité difficile, voire impossible, d'y réaliser le traitement du matériau. En particulier, il est difficile d'assurer avec ce dispositif la combustion des gaz dégagés que propose le procédé, et il est aussi difficile et dangereux de procéder au chauffage en circuit fermé.

L'abrégé de la demande JP-A-04 148 184 décrit une installation de séchage de poteaux, présentant une chambre de réception étanche. A côté de cette chambre est disposée un four de génération de gaz de combustion, qui communique à sa partie supérieure avec la partie supérieure de la chambre. En fonctionnement, la chambre est fermée; un ventilateur situé sous la charge à sécher aspire l'air et l'envoie vers le four. Ceci assure un remplissage de la chambre par les gaz de combustion à haute température, ainsi qu'une dilution de l'air fournie au four. On obtient une température uniforme dans la chambre sans variations du taux d'oxygène.

WO-A-94 27102 propose un procédé de traitement du bois par chauffage. Ce document propose, pendant un séchage à haute température, de limiter la différence entre les températures extérieure et intérieure du produit entre 10 et 30°C pour éviter la formation de fissures.

L'invention propose un procédé permettant de surmonter ces inconvénients. Elle assure un traitement à haute température simple, efficace, qui préserve les qualités mécaniques du matériau et est facile à mettre en oeuvre. Le dispositif qui peut être mis en oeuvre dans le procédé selon l'invention présente une structure simple et robuste, et permet sans réglables compliqués d'assurer un traitement efficace. Il permet notamment un pilotage automatique du traitement.

Plus précisément, ce dispositif de traitement à haute température de matériau ligno-cellulosique comprend une chambre de traitement du matériau, au moins une chambre de combustion avec au moins un brûleur, des moyens de brassage assurant une circulation des gaz de la chambre de traitement, dans lequel le brûleur est réglé de sorte à fonctionner en atmosphère réductrice et dans lequel la chambre de combustion est reliée aux moyens de brassage en parallèle à la chambre de traitement de sorte qu'une partie des gaz provenant de la chambre de traitement circule à travers la chambre de combustion.

Le dispositif peut comprendre un canal d'aspiration des gaz dans la chambre de traitement, relié au côté d'aspiration des moyens de brassage, un canal de refoulement des gaz vers la chambre de traitement, relié au côté de refoulement des moyens de brassage, une dérivation sur le canal d'aspiration reliée à la chambre de combustion, et une dérivation sur le canal de refoulement reliée à la chambre de combustion.

Dans ce cas, la dérivation sur le canal d'aspiration ou sur le canal de refoulement peut déboucher dans la chambre de combustion au voisinage d'un brûleur.

Le dispositif peut aussi comprendre au moins une cheminée d'extraction sur le trajet de circulation des gaz de la chambre de traitement, en aval des moyens de brassage.

On prévoit de préférence des moyens d'amenée d'eau dans la chambre de combustion au voisinage du brûleur; on peut aussi prévoir des capteurs de température pour capter la température à l'extérieur du matériau et la température au sein du matériau, et des moyens de pilotage du ou des brûleurs de sorte à maintenir une différence Δ sensiblement constante entre la température à l'extérieur du matériau et la température au sein du matériau au cours du traitement avant le refroidissement, la dite différence étant de préférence fonction de la section du matériau à traiter.

Ces capteurs de température comprennent avantageusement au moins un capteur au voisinage des parois de la chambre de traitement pour capter la température à l'extérieur du matériau et au moins un capteur mobile destiné à être disposé à l'intérieur de la charge de matériau pour capter la température au sein du matériau.

L'invention propose un procédé de traitement à haute température de matériau ligno-cellulosique, mettant en oeuvre un tel dispositif avec une cheminée d'extraction sur le trajet de circulation des gaz de la chambre de traitement, en aval des moyens de brassage; le procédé comprend les étapes de :
- préchauffage et séchage du matériau à une température voisine de la température de vaporisation de l'eau;
- chauffage du matériau en atmosphère réductrice, la cheminée d'extraction restant ouverte;
- refroidissement du matériau par injection de vapeur d'eau.

L'étape de préchauffage et séchage est avantageusement poursuivie jusqu'à l'évaporation quasi-complète de l'eau libre contenue dans le matériau, de préférence jusqu'à ce que l'humidité des gaz autour du matériau soit inférieure à 12%.

L'étape de chauffage du matériau en atmosphère réductrice peut s'effectuer jusqu'à atteindre une température comprise entre 200 et 240°C, et de préférence entre 220 et 230°C.

L'étape de chauffage du matériau en atmosphère réductrice peut aussi s'effectuer en faisant circuler les gaz dégagés par le matériau à travers une chambre de combustion avec au moins un brûleur en atmosphère réductrice.

L'étape de chauffage du matériau en atmosphère réductrice est de préférence suivie d'une étape de maintien du matériau à une température voisine de la température atteinte au cours de l'étape de chauffage.

L'étape de refroidissement du matériau par injection de vapeur d'eau peut aussi être suivie d'une étape de refroidissement par circulation d'air.

Le traitement s'effectue avantageusement en maintenant une différence sensiblement constante entre la température à l'extérieur du matériau et la température au sein du matériau au cours des étapes de préchauffage et de séchage et de chauffage, la dite différence étant de préférence fonction de la section du matériau à traiter.

D'autres avantages et caractéristiques de l'invention apparaîtront à la lecture de la description qui suit d'un mode de réalisation de l'invention, données à titre d'exemple et en référence aux dessins de la description, qui montrent :
- figure 1, une vue schématique d'un dispositif apte à être mis en oeuvre dans le procédé selon l'invention;
- figure 2, une vue en coupe latérale du dispositif de la figure 1;
- figure 3, une vue en coupe longitudinale du dispositif de la figure 1;
- figure 4, une vue en perspective du haut du dispositif de la figure 1, avec un arrachement partiel;
- figure 5, une vue en coupe à plus grande échelle d'une cheminée du dispositif de la figure 1;
- figure 6, une vue en coupe à plus grande échelle d'un barboteur du dispositif de la figure 1;
- la figure 7, un diagramme de la circulation des gaz dans un second mode de réalisation d'un dispositif apte à être mis en oeuvre dans le procédé selon l'invention,
- la figure 8, une représentation schématique de la température en fonction du temps au cours du traitement selon l'invention.

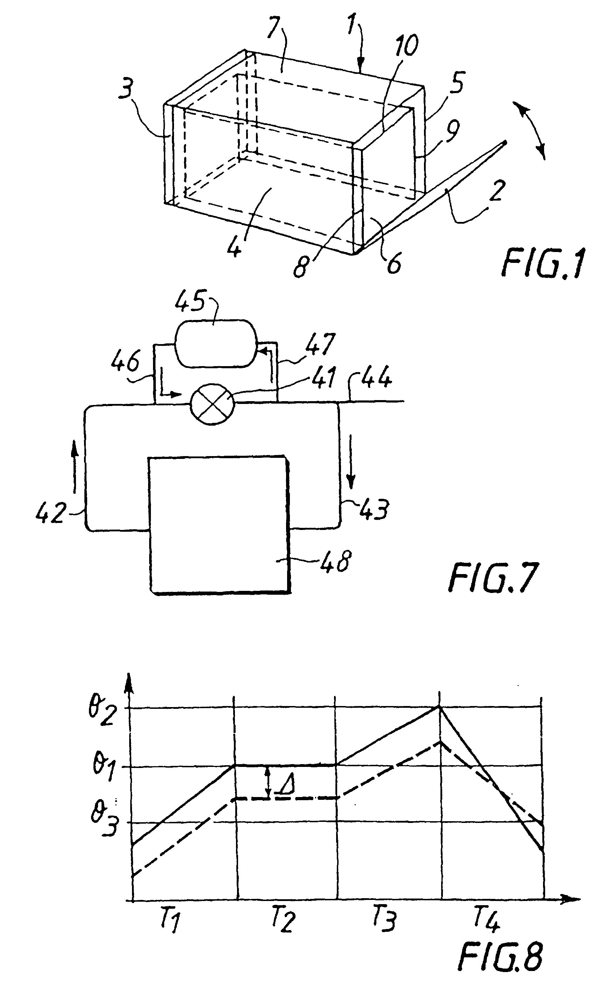

La figure 1 montre une vue schématique en perspective d'un dispositif apte à être mis en oeuvre dans le procédé selon l'invention. Le dispositif de traitement comprend une cellule 1, formant un tunnel de section rectangulaire et destiné à recevoir le matériau à traiter. Les extrémités de la cellule peuvent être fermées au moyen d'une porte 2 et d'un fond 3. Cette configuration permet le cas échéant d'assembler plusieurs cellules, par exemple pour le traitement de charges longues ou de volumes important. Une telle cellule peut par exemple mesurer 4,50 m de long, 1,45 m de large et 2,15 m de haut. Ces dimensions assurent un volume de traitement utile de l'ordre de 6 à 10 m³ de matériau ligno-cellulosique.

Chaque cellule comprend une paroi extérieure étanche, de préférence calorifugée, qui assure la stabilité mécanique de la cellule, une chambre de traitement avec deux pans latéraux 4, 5, un plancher 6 et un plafond 7. A l'intérieur de cette paroi extérieure, la cellule présente des parois intérieures, définissant une chambre de traitement entre deux pans latéraux à claire voie 8, 9, une voûte 10, et le plancher 6.

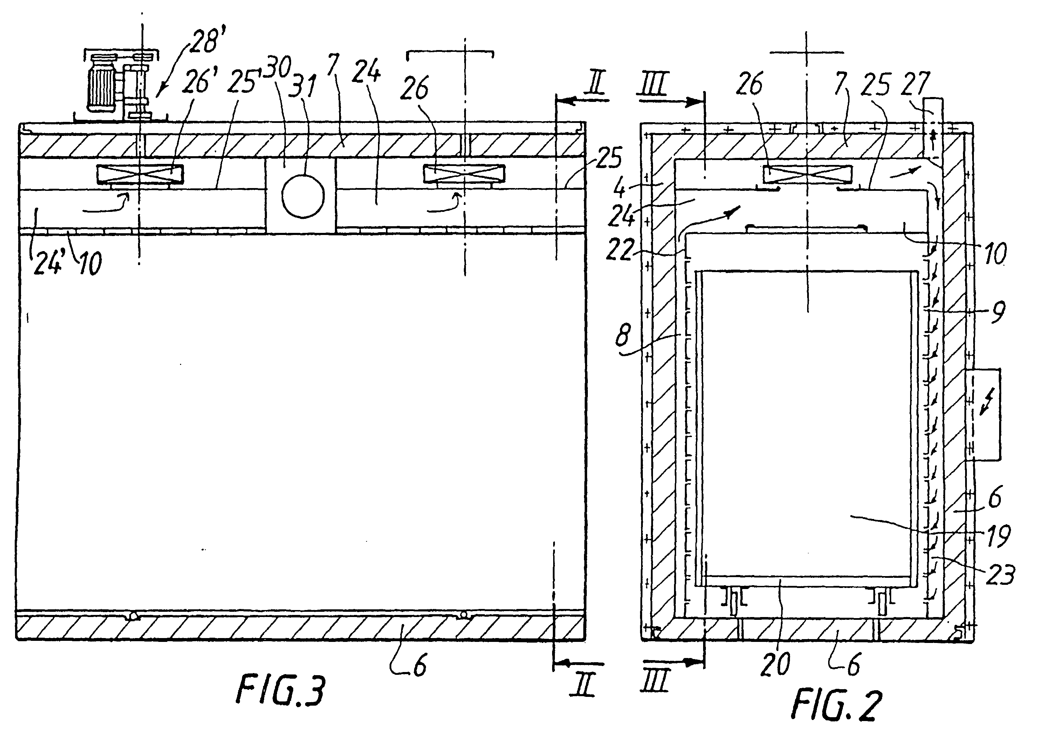

La figure 2 montre une vue schématique en coupe latérale du dispositif de la figure 1. On reconnaît sur la figure 2 les éléments déjà décrits à la figure 1. On a en outre représenté sur la figure 2 une charge de matériau à traiter 19, introduite dans la chambre de traitement sur un chariot 20. Sur chaque côté de la cellule, les pans latéraux de la paroi extérieure 4 et 8 (respectivement 5 et 9) définissent un canal 22 (respectivement 23), qui sert à la circulation des gaz. Du côté aspiration, à gauche sur la figure 2, le canal 22 d'aspiration débouche dans une chambre d'aspiration 24, définie entre la voûte 10 et une paroi horizontale 25 disposée au-dessus de celle-ci. Une turbine de brassage 26, qui peut être entraînée par un groupe moto-ventilateur situé à l'extérieur de la cellule, aspire lez gaz situés dans la chambre d'aspiration 24, et les refoule en partie vers une cheminée d'évacuation 27, en partie vers le canal de refoulement 23 et en partie vers une chambre de combustion décrite par la suite. Les gaz dans la cellule circulent ainsi depuis la chambre de traitement vers le canal d'aspiration 22 à travers le pan latéral à claire-voie 8, puis vers la chambre d'aspiration 24, traversent la turbine 26 et sont refoulés vers le canal de refoulement 23 puis vers la chambre de traitement à travers le pan latéral 9.

La figure 3 montre une vue en coupe longitudinale du dispositif de la figure 1, dans le plan III-III de la figure 2. La charge 19 et le chariot 20 ne sont pas représentés sur la figure 3. Est indiqué sur la figure 3 le plan II-II de la coupe de la figure 2. Comme le montre la figure 3, la chambre d'aspiration 24 ne s'étend par sur toute la longueur de la cellule: une chambre de combustion 30 est ménagée entre la voûte 10 et le plafond 7; un brûleur 31 est disposé dans la chambre 30. Dans le mode de réalisation des figures 2 et 3, la chambre de combustion est disposée au voisinage du milieu de la cellule, qui présente de chaque côté de la chambre de combustion une chambre d'aspiration 24, 24' et une turbine 26, 26'. Cette configuration permet d'assurer un brassage homogène des gaz, avec des turbines de taille raisonnable. On pourrait aussi adopter des configurations différentes, par exemple avec deux chambres de combustion et une chambre d'aspiration avec une ou plusieurs turbines. On a aussi représenté sur la figure 3 un des groupes moto-ventilateurs 28' entraînant la turbine de brassage 26'.

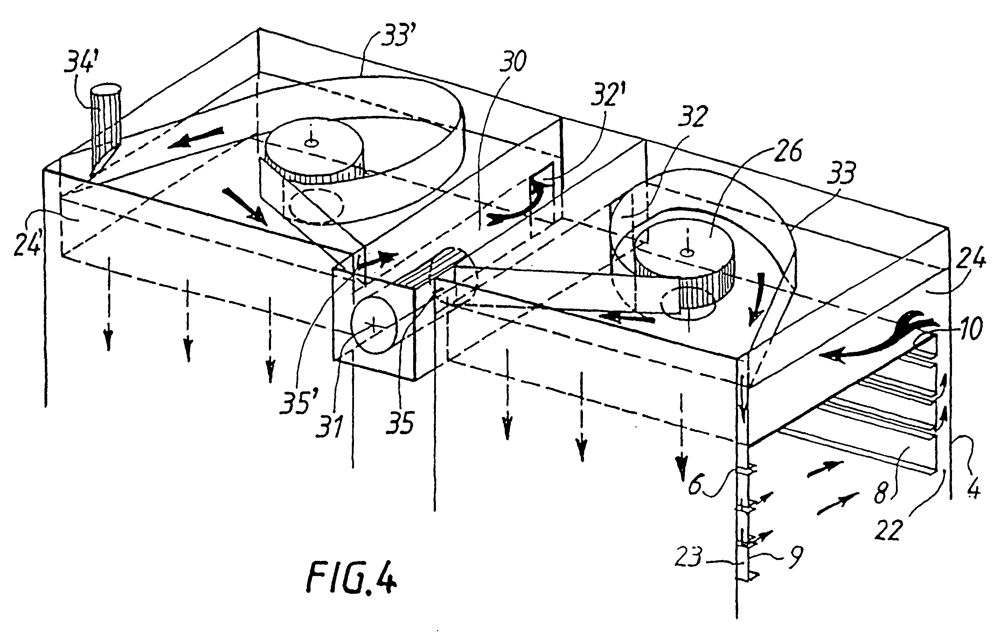

La figure 4 montre une vue en perspective du haut de la cellule . Outre les éléments déjà décrits, la figure 4 montre que la chambre de combustion 30 s'étend sur la largeur de la cellule et présente à son extrémité opposée à l'emplacement du brûleur 31 des ouvertures 32, 32', débouchant dans les chambres d'aspiration 24 et 24'. On peut avantageusement munir ces ouvertures d'un ou de deux volets de réglage permettant d'équilibrer les flux en provenant de la chambre de combustion 30 vers les chambres d'aspiration 24, 24'. La figure 4 montre les chicanes de refoulement 33, 33' des turbines de brassage 26 et 26', qui canalisent l'air refoulé par les turbines vers le canal de refoulement 23, vers les cheminées d'extraction - seule l'une 34 des deux cheminées est représentées, et vers des ouvertures 35, 35' débouchant dans la chambre de combustion 30 au voisinage du brûleur 31. On prévoit dans l'une au moins des cheminées d'extraction un capteur d'humidité.

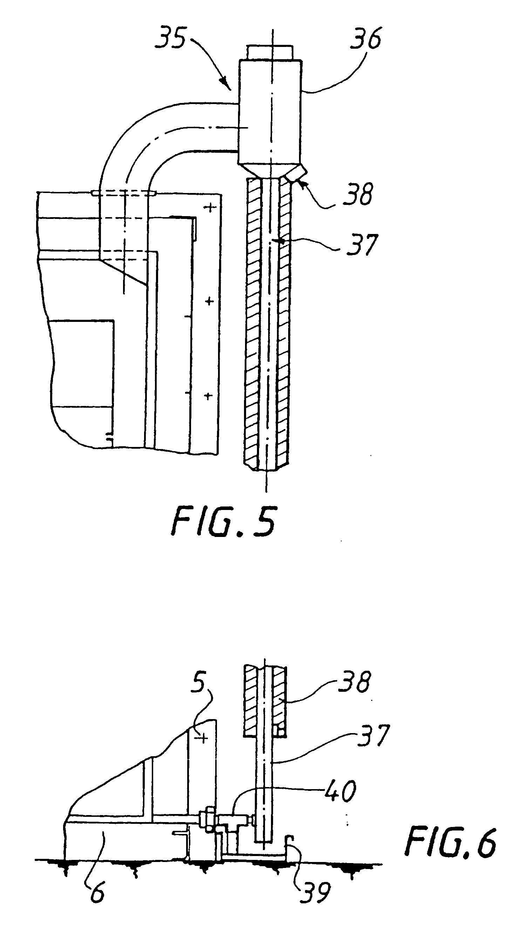

On peut avantageusement prévoir les divers détails de construction qui suivent. Les pans latéraux 8 et 9 à claire voie peuvent être constitués de pièces horizontales, réglables en hauteur de façon à pouvoir ménager entre elles des intervalles plus ou moins importants. On assure ainsi une répartition homogène du flux de gaz dans la chambre de traitement en ménageant des ouvertures plus petites dans le haut des pans latéraux 8, 9 qu'en bas de ceux-ci. Comme le montre la figure 5, les cheminées 34 peuvent être munies de récupérateurs de goudrons, sous la forme d'un condensateur 36, les goudrons condensés s'écoulant vers le bas du condenseur 36 dans un tuyau vertical 37 chauffé par une résistance 38. On évite ainsi le refoulement vers l'atmosphère de gaz chargés en goudrons. A son extrémité inférieure, le tuyau 37 débouche dans un barboteur 39 représenté à la figure 6. Le barboteur recueille les goudrons s'écoulant du tuyau 37. Il reçoit aussi par un tuyau 40 les goudrons s'écoulant sur le plancher de la chambre de traitement. L'extrémité du tuyau 40 débouche dans le fond du barboteur 39, de sorte à éviter les échanges de gaz par le tuyau 40 entre l'extérieur et la chambre de traitement.

Sont en outre prévus dans la chambre de traitement, des rampes d'injection d'eau pour parer à tout risque d'incendie. L'utilisation de ces rampes permet de refroidir rapidement le matériau ligno-cellulosique se trouvant dans la cellule, en cas d'inflammation. On limite ainsi les risques dus à une inflammation accidentelle. On peut avantageusement prévoir que ces rampes sont alimentées par une réserve d'eau située en haut du four, et contrôlée par des électrovannes alimentées par un onduleur; ceci permet de pallier à une coupure totale des réseaux d'alimentation électrique et en eau, en conservant un dispositif de sécurité.

On prévoit dans la cellule des capteurs de température, qui peuvent être utilisés, comme expliqué plus bas, pour le contrôle du traitement. On prévoit aussi une arrivée d'eau dans la chambre de combustion 30, au voisinage du brûleur, dont l'utilité est expliquée ci-dessous.

Le dispositif permet un traitement efficace et rapide du matériau ligno-cellulosique. Le matériau est d'abord chargé dans le dispositif de traitement. Pour cela, on utilise avantageusement des chariots du type de celui représenté schématiquement à la figure 2. On peut utiliser des chariots de 2 m de longueur, solidaires, qui entrent et sortent de la cellule par un système de traction bidirectionnel à chaîne, dont les moyens d'entraînement sont à l'extérieur de la cellule. Un tel système présente l'avantage de pouvoir facilement être adapté à la longueur du four: il suffit en effet, si on assemble par exemple deux cellules, un porte et un fond pour constituer un dispositif de traitement de 9 m de long, d'allonger en correspondance la chaîne d'entraînement des chariots.

Le matériau à traiter est empilé sur les chariots, en prévoyant entre chaque couche des tasseaux permettant, lors du traitement, d'assurer une circulation des gaz à l'intérieur de la charge. Pour les dimensions de cellule indiquées plus haut, on atteint donc une capacité de 6 à 10m³ de matériau à traiter, en fonction de l'épaisseur.

On dispose ensuite un capteur de température à l'intérieur de la charge. Les capteurs de température de la cellule comprennent donc un ou plusieurs capteurs fixes montés au voisinage des pans latéraux à claire voie 8 et 9, et par exemple quatre ou huit capteurs montés dans les coins de la cellule. Ils comprennent aussi un ou plusieurs capteurs montés sur un fil dépassant dans la chambre de traitement, de sorte à pouvoir être disposé(s) à l'intérieur de la charge. Dans un mode de réalisation préféré, on utilise un trois capteurs mobile permettant de mesurer la température au sein du matériau et quatre capteurs fixes disposés sur les parois de la chambre de traitement.

On ferme ensuite la porte du dispositif, et on procède au traitement. Pour cela, on peut avantageusement prévoir un pilotage informatique, en fonction de la température mesurée par les capteurs fixés et mobile, ainsi que des taux d'humidité mesurés par le ou les capteurs d'humidité.

On pilote à partir des données mesurées par les capteurs, en tenant compte de différents paramètres de consigne, le fonctionnement du brûleur de la chambre de combustion. Le brûleur est conçu pour fonctionner en atmosphère réductrice et assure que le taux d'oxygène dans la chambre de combustion reste toujours inférieur à un pourcentage faible, par exemple environ 3%. On peut par exemple utiliser un brûleur KROMSCHRODER modèle BIO 65 RG. Une puissance de 60 kW suffit pour les dimensions de four mentionnées plus haut. Le brûleur est piloté par des électrovannes assurant le réglage simultané des débits de gaz de combustion, par exemple de l'air et du propane. Le brûleur est en outre conçu pour pouvoir être rallumé à tout instant sans pré-ventilation de la chambre de combustion.

La figure 7 montre une représentation schématique du flux de gaz selon l'invention. La référence 48 désigne la chambre de traitement. La référence 41 désigne les moyens de brassage des gaz. Comme symbolisé par le trait 42, les moyens de brassage aspirent les gaz dans la chambre de traitement 48 par une conduite d'aspiration. Ils les y refoulent ensuite par une conduite de refoulement, comme symbolisé par le trait 43. Une partie des gaz peut s'échapper par la cheminée 44, située sur la conduite de refoulement, côté refoulement des moyens de brassage 41. Selon l'invention, les gaz de la chambre de combustion 45 sont aussi brasés par les moyens de brassage 41, en parallèle à ceux de la chambre de traitement. Ceci est effectué par une dérivation d'aspiration 46 sur la conduite d'aspiration 42, qui débouche d'un côté de la chambre de combustion. Une autre déviation de refoulement 47 sur la conduite de refoulement 43 débouche d'un autre côté de la chambre de combustion 45, de sorte à assurer une bonne circulation des gaz à l'intérieur de celle-ci.

Dans le mode de réalisation des figures 2 à 4, la dérivation de refoulement 47 débouche au voisinage du brûleur de la chambre de combustion. On pourrait aussi prévoir que la conduite d'aspiration 46 débouche au voisinage du brûleur. Dans le dispositif de la figure 3, il suffirait pour cela de disposer le brûleur à l'autre extrémité de la chambre de combustion, ou de modifier la position des ouvertures dans la chambre de combustion.

On assure dans les deux cas une circulation partielle à travers la chambre de combustion des gaz de la chambre de traitement, comme expliqué plus bas.

La figure 8 montre l'évolution au cours du traitement de la température mesurée par les capteurs fixes (en trait plein) et mobile (en traits interrompus). Comme le montre la figure 8, on peut assurer le pilotage automatique du dispositif de traitement grâce aux capteurs de température, en maintenant une différence Δ sensiblement constante entre la température moyenne fournie par les capteurs fixes et la température moyenne fournie par les capteurs mobiles. Cette différence est avantageusement fonction de l'épaisseur du matériau à traiter: le tableau 1 montre la différence de température, en °C, en fonction de l'épaisseur du matériau chargé sur le chariot.

**Tableau 1**

| Δ(°C) | Epaisseur (mm) |
|---|---|
| 5 | 5-10 |
| 10 | 11-15 |
| 15 | 16-20 |
| 20 | 21-40 |
| 30 | 41-60 |
| 40 | 61-90 |
| 50 | >90 |

Le tableau montre la plage importante d'épaisseur des matériaux pouvant être traités grâce à l'invention.

La première étape de traitement est une étape de préchauffage du matériau jusqu'à une température de séchage θ₁. Cette température est suffisante pour assurer l'évaporation de l'eau libre contenu dans le matériau, et est par exemple comprise entre 100 et 120°C, de préférence autour de 105°C. La durée T₁ de cette étape de préchauffage dépend de l'épaisseur et de l'essence du matériau à traiter. On peut facilement piloter le brûleur pour assurer une montée en température progressive, en maintenant la différence Δ sensiblement constante, comme le montre la figure 7. On pourrait aussi utiliser une autre méthode pour contrôler la montée en température.

Une fois la température θ₁ de séchage atteinte, on procède au séchage du matériau en maintenant la même température ou une température sensiblement voisine jusqu'à évaporation quasi complète de toute l'eau libre contenue dans le matériau. Pendant cette étape de séchage, comme pendant l'étape de préchauffage, les turbines de brassage assurent la circulation à travers la chambre de combustion d'une partie des gaz provenant de la chambre de traitement. Ceci permet de maintenir la température dans la chambre de traitement, en fournissant grâce au brûleur l'énergie nécessaire à la vaporisation de l'eau libre. Le fonctionnement du brûleur en atmosphère réductrice assure que le matériau traité ne s'enflamme pas, même s'il est porté à une température élevée. Pendant le séchage du matériau, on pilote le brûleur en fonction des températures mesurées. On mesure aussi le taux d'humidité dans les cheminées d'extraction. On passe à l'étape suivante lorsque l'eau libre contenue dans le matériau a été quasiment évaporée, par exemple lorsque le taux d'humidité au niveau des cheminées est compris entre 10 et 20%, de préférence 12%. Ce taux est suffisant pour assurer un traitement ultérieur correct du matériau, et il n'est pas indispensable ni utile de rechercher une évaporation plus complète.

La durée T₂ de la phase de séchage dépend encore de l'essence du matériau à traiter, de la quantité d'eau libre qu'il contient, ainsi que des dimensions des éléments. Cette durée peut être nulle dans le cas de matériau très sec au départ, l'eau libre étant alors vaporisée pendant la phase de préchauffage.

On procède ensuite à une étape de chauffage du matériau séché, en augmentant la température jusqu'à une température de consigne θ₂. Celle-ci dépend de nouveau de l'essence du matériau à traiter, et est typiquement comprise entre 200 et 240°C. Elle peut être voisine de 220°C pour certains feuillus, tels le châtaignier ou voisine de 230°C pour les résineux, tels le Douglas. La montée en température peut de nouveau être pilotée grâce aux températures mesurées par les capteurs fixes et mobiles; dans ce cas, la durée T₃ de cette étape de chauffage n'est pas déterminée à l'avance, mais dépend de nouveau de l'essence du matériau, de son épaisseur, et de la charge du four. Pendant cette étape, les cheminées d'extraction restent ouvertes, pour assurer l'évacuation de la vapeur d'eau résiduelle et des gaz brûlés. Les taux d'oxygène dans le dispositif de traitement est limité du fait que le brûleur fonctionne en atmosphère réductrice. En outre, le matériau chauffé dégage un mélange combustible, brûlé dans la chambre de combustion. On évite ainsi tout risque d'inflammation du matériau.

On peut prévoir, à la fin de cette étape de chauffage, un maintien du matériau à la température de consigne θ₂; ceci n'a rien d'indispensable pour obtenir des résultats de résistance mécanique recherchés habituellement dans un traitement à haute température, mais peut permettre d'obtenir une coloration donnée du matériau.

On procède ensuite au refroidissement du matériau. Pour cela, en utilisant le brûleur, on vaporise de l'eau dans la chambre de combustion. Ceci a pour effet de faire diminuer la température dans la chambre de traitement, sans pour autant engendrer de chocs thermiques. En outre, ceci assure un refroidissement du matériau plus homogène que si l'on pulvérisait de l'eau directement dans la chambre de traitement. On poursuit le refroidissement jusqu'à ce que la température au sein du matériau, mesurée par le ou les capteurs mobiles soit inférieure à une troisième température θ₃, limitant les risques d'inflammation du matériau en sortie du four. Dans la pratique, une température voisine de 80°C est suffisante. Pendant toute cette étape de refroidissement, les cheminées d'extraction émettent de la vapeur d'eau. L'arrivée d'une quantité de 25 cl d'eau toutes les 15 secondes permet un refroidissement efficace pour les dimensions de cellule indiquées plus haut. A partir du moment où la température au sein du matériau atteint environ 120°C, on poursuit le refroidissement sans injection de vapeur d'eau, par simple brassage des gaz dans la chambre de traitement. Pendant cette étape de refroidissement, la température au sein du matériau à traiter devient supérieure à la température extérieure, comme représenté sur la figure 8. On peut piloter le refroidissement simplement en contrôlant la quantité d'eau injectée.

A titre d'exemple pour un traitement de planches de section de 120 x 27 mm en un feuillu tel que le chêne, on peut utiliser les paramètres suivants:
θ₁ = 120°C; θ₂ = 220°C; θ₃ = 100°C; Δ = 20 à 40°C

Le traitement s'effectue avec des durées:
T₁ = 5 à 8 heures; T₂ = 1 à 4 heures; T₃ = 2 à 6 heures; T₄ = 15 à 45 mn.

Pour le traitement de planches de section de 120 x 27 mm en un résineux tel que le Douglas, on peut utiliser les paramètres suivants:
θ₁ = 120°C; θ₂ = 230°C; θ₃ = 80°C; Δ = 20 à 30°C

Le traitement s'effectue avec des durées:
T₁ = 4 à 7 heures; T₂ = 2 à 3 heures; T₃ = 1 à 5 heures; T₄ = 15 à 45 mn.

L'invention permet un traitement simple, entièrement automatique du matériau ligno-cellulosique. La circulation à travers la chambre de combustion des gaz provenant de la chambre de traitement, ainsi que le fonctionnement du brûleur en atmosphère réductrice, permettent de simplifier la structure du dispositif.

Bien entendu, l'invention n'est pas limitée aux modes de réalisation décrits à titre d'exemple. On peut ainsi faire varier le nombre et la nature des dispositifs de brassage de chambre de combustion, ainsi que de brûleurs. On peut adopter d'autres modes de pilotage de l'installation, par exemple en programmant la dure de chaque étape du traitement.

On pourrait utiliser pour capter la température à l'extérieur du matériau un ou plusieurs capteurs de température disposé ailleurs que dans la chambre de traitement, par exemple dans le canal d'aspiration ou dans le canal de refoulement. Pour mesurer la température au sein du matériau, on peut utiliser comme proposé plus haut un capteur mobile. D'autres moyens sont possibles, comme par exemple une sonde.

## Revendications

1. Procédé de traitement à haute température de matériau ligno-cellulosique, comprenant les étapes de :
- préchauffage et séchage du matériau à une température voisine de la température de vaporisation de l'eau;
- chauffage du matériau en atmosphère réductrice en circuit ouvert;
- refroidissement du matériau par injection de vapeur d'eau.

2. Procédé selon la revendication 1, **caractérisé en ce que** l'étape de préchauffage et séchage est poursuivie jusqu'à l'évaporation quasi-complète de l'eau libre contenue dans le matériau, de préférence jusqu'à ce que l'humidité des gaz autour du matériau soit inférieure à 12%.

3. Procédé selon la revendication 1 ou 2, **caractérisé en ce que** l'étape de chauffage du matériau en atmosphère réductrice s'effectue jusqu'à atteindre une température comprise entre 200 et 240°C, et de préférence entre 220 et 230°C.

4. Procédé selon la revendication 1, 2 ou 3, **caractérisé en ce que** l'étape de chauffage du matériau en atmosphère réductrice s'effectue en faisant circuler les gaz dégagés par le matériau à travers une chambre de combustion avec au moins un brûleur en atmosphère réductrice.

5. Procédé selon l'une des revendications 1 à 4, **caractérisé en ce que** l'étape de chauffage du matériau en atmosphère réductrice est suivie d'une étape de maintien du matériau à une température voisine de la température atteinte au cours de l'étape de chauffage.

6. Procédé selon l'une des revendications 1 à 5, **caractérisé en ce que** l'étape de refroidissement du matériau par injection de vapeur d'eau est suivie d'une étape de refroidissement par circulation d'air.

7. Procédé selon l'une des revendications 1 à 6, **caractérisé en ce que** le traitement s'effectue en maintenant une différence sensiblement constante entre la température à l'extérieur du matériau et la température au sein du matériau au cours des étapes de préchauffage et de séchage et de chauffage, la dite différence étant de préférence fonction de la section du matériau à traiter.

## Patentansprüche

1. Verfahren zum Behandeln von Lignocellulose-Material bei hoher Temperatur, wobei die Schritte umfasst sind:
- Vorwarmen und Trocknen des Materials auf eine Temperatur in der Nähe der Verdampfungstemperatur vom Wasser;
- Erwärmen des Materials unter verminderter Atmosphäre in offenem Kreislauf;
- Abkühlung der Materialien durch Injektion von Wasserdampf.

2. Verfahren gemäss Anspruch 1, **dadurch gekennzeichnet, dass** der Schritt des Vorwärmens und Trocknens fortgesetzt wird bis zur quasi vollständigen Verdampfung des im Material enthaltenen, freien Wassers, vorzugsweise bis die Feuchtigkeit der Gase um das Material herum unter 12% ist

3. Verfahren gemäss Anspruch 1 oder 2, **dadurch gekennzeichnet, dass** der Schritt des Erwärmens des Materials unter verminderter Atmosphäre bewirkt wird, bis eine Temperatur von zwischen einschliesslich 200 und 240°C und vorzugsweise zwischen 220 und 230°C erreicht wird.

4. Verfahren gemäss Anspruch 1, 2 oder 3, **dadurch grkennzeichnet, dass** der Schritt des Erwärmens des Materials unter verminderter Atmosphäre bewirkt wird, indem die vom Material freigesetzten Gase mit mindestens einem Brenner unter verminderter Atmosphäre durch eine Verbrennungskammer hindurch zirkulieren gelassen werden.

5. Verfahren gemäss einem der Ansprüche 1 bis 4, **dadurch gekennzeichnet, dass** auf den Schritt des Erwärmens des Materials unter verminderter Atmosphäre ein Schritt der Aufrechterhaltung des Materials auf einer Temperatur in der Nähe der Temperatur, die im Verlauf des Schritts des Erwärmens erreicht wurde, folgt.

6. Verfahren gemäss einem der Ansprüche 1 bis 5, **dadurch gekennzeichnet, dass** dem Schritt der Abkuhlung des Materials durch Injektion von Wasserdampf ein Schritt der Abkühlung durch Luftzirkulation folgt

7. Verfahren gemäss einem der Ansprüche 1 bis 6, **dadurch gekennzeichnet, dass** die Behandlung bewirkt wird unter Aufrechthaltung eines im wesentlichen konstanten Unterschieds zwischen der Temperatur im Aussenbereich des Materials und der Temperatur im Inneren des Materials im Verlauf der Schritte des Vorwärmens und Trocknens sowie des Erwärmens, wobei der Unterschied vorzugsweise vom Querschnitt des zu behandelnden Materials abhängt.

## Claims

1. A method for high temperature treatment of lignocellulosic material, comprising the steps of
- pre-heating and drying material at a temperature close to the vaporization temperature of water;
- heating said material in a reducing atmosphere under open loop conditions;
- cooling said material by injecting water vapor.

2. The method according to claim 1, **characterised in that** the pre-heating and drying step is continued until practically all the free water contained in said material has evaporated, preferably until the humidity of gases around said material is less than 12%.

3. The method according to claim 1 or 2, **characterised in that** the step of heating said material in a reducing atmosphere is carried out until a temperature comprised between 200 and 240°C, and preferably between 220 and 230°C, is reached.

4. The method according to claim 1, 2 or 3, **characterised in that** the step of heating said material in a reducing atmosphere is carried out while causing gases released by said material to circulate through a combustion chamber with at least one burner, in a reducing atmosphere.

5. The method according to one of claims 1-4, **characterised in that** the step of heating said material in a reducing atmosphere is followed by a step in which said material is maintained at a temperature close to the temperature reached during said heating step.

6. The method according to one of claims 1-5, **characterised in that** the step of cooling said material by injecting water vapor is followed by a cooling step, by circulation of air.

7. The method according to one of claims 1-6, **characterised in that** treatment is carried out by maintaining a substantially constant difference between a temperature external of said material and a temperature within said material during the steps of pre-heating, drying, and heating, said difference being preferably dependent upon the cross-section of the material to be treated.
